# EUROPEAN PATENT SPECIFICATION

(11) **EP 2 708 321 B1**
(45) Date of publication and mention of the grant of the patent: **04.03.2015**
(21) Application number: 13184813.7
(22) Date of filing: 17.09.2013
(51) Int. Cl.: B23Q 11/08, F16P 1/02

(54) **Covering device**
Abdeckvorrichtung
Dispositif de recouvrement

(30) Priority: 18.09.2012 IT BO20120492
(43) Date of publication of application: 19.03.2014
(73) Proprietor: P.E.I. Protezioni Elaborazioni Industriali S.r.l., 40012 Calderara di Reno (Bologna) (IT)
(72) Inventor: Tabellini, Giorgio, 40037 Sasso Marconi (Bologna) (IT); Maccaferri, Fabio, 40010 SALA BOLOGNESE (BOLOGNA) (IT)
(74) Representative: Bianciardi, Ezio

(56) References cited:
- DE-A1-102005 031 539
- DE-U1-202004 004 685
- DE-U1-202005 014 596
- DE-U1-202007 008 389
- US-A- 5 156 195

## Description

This invention relates to a covering device for machinery or equipment, according to the preamble of claim 1, as known from DE-A-10 2005 031 539. More specifically, the covering devices referred to can be advantageously applied in several industrial sectors, such as, for example, the sector of machine tools and automatic machines, whose fixed or moving parts, such as slideways and working tools, are protected by the covering devices.

These covering devices comprise a set of parallel covering elements movable towards and away from each other from a least extended configuration to a most extended configuration and vice versa.

At one end of it, each covering element comprises a mounting frame, usually fixed, relative to which the covering elements move when they are extended or retracted. Some mounting frames are preferably L-shaped and have side and corner covering panels fixed to them.

The side covering panels are usually made of metal because they have to be resistant to chippings, swarf and other machine process waste. As a result, they have a substantially rigid, inflexible structure. The main problem affecting the smooth operation of the covers of this kind is that the individual side covering panels, which also substantially have the shape of an L defined by two perpendicular elements, must have a gap between them at the corners of the frame to avoid creating excessive mechanical stresses at the corners which would lead to uncontrolled friction preventing the covers themselves from sliding relative to each other.

This feature, although it solves the problem of friction, means that the corner zones of the cover are left unprotected.

An attempt to overcome this problem was made by eliminating the bend from each panel at the corner zones, which formed a substantially sharp edge between the two elements making up the L. More specifically, each corner zone was given a rounded form either by shaping each panel or by adding a third portion, interposed between the two elements making up the L, in such a way as to create stretches which were inclined relative to the corner.

Covering devices of this kind, too, however, are not free of disadvantages.

One major disadvantage is due to the relatively large size of the covering device in the least extended configuration because the minimum size is given by the sum of the lengths of the corner covering elements. Are known from the art coverage devices as described and shown, respectively, in documents US5156195, DE102005031539, DE202005014596.

This invention has for an aim to provide a covering device which overcomes the above mentioned disadvantages.

The technical purpose and aims specified are achieved by a device having the features set out in independent claim 1.

Further features and advantages of the invention are more apparent from the non-limiting description which follows of a preferred embodiment of a covering device as illustrated in the accompanying drawings, in which:
- Figure 1 is a first perspective view of the covering device according to the invention;
- Figure 2 shows a scaled-up view of a detail from Figure 1;
- Figure 3 is a second perspective view of the covering device according to the invention;
- Figure 3a shows a scaled-up view of a detail from Figure 3;
- Figure 4 shows a scaled-up exploded view, with some parts cut away in order to better illustrate others, of a detail from Figure 3;
- Figure 5 shows some details from Figure 4 in a further perspective view.

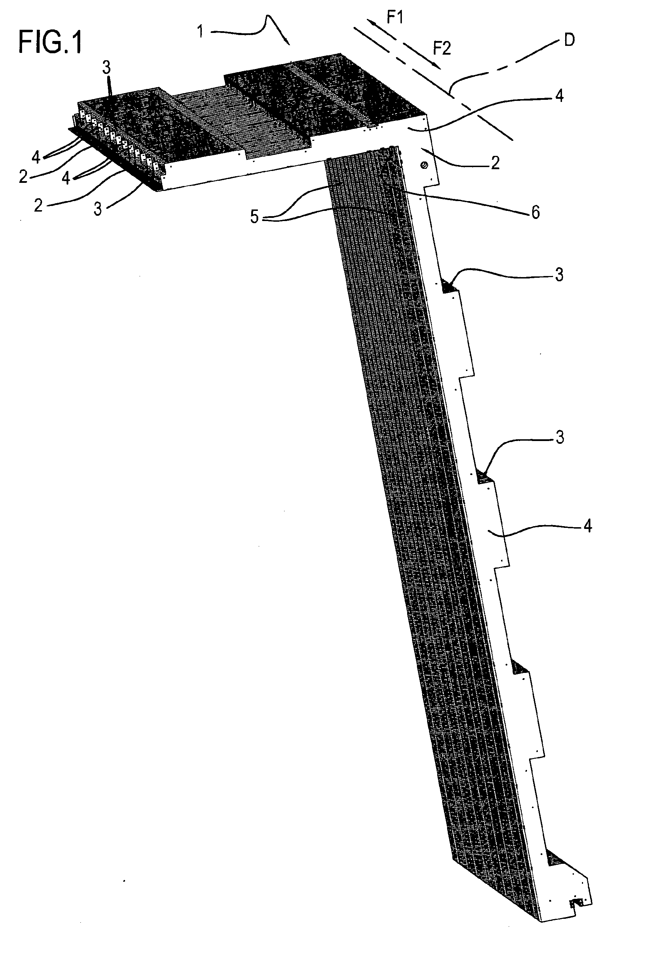

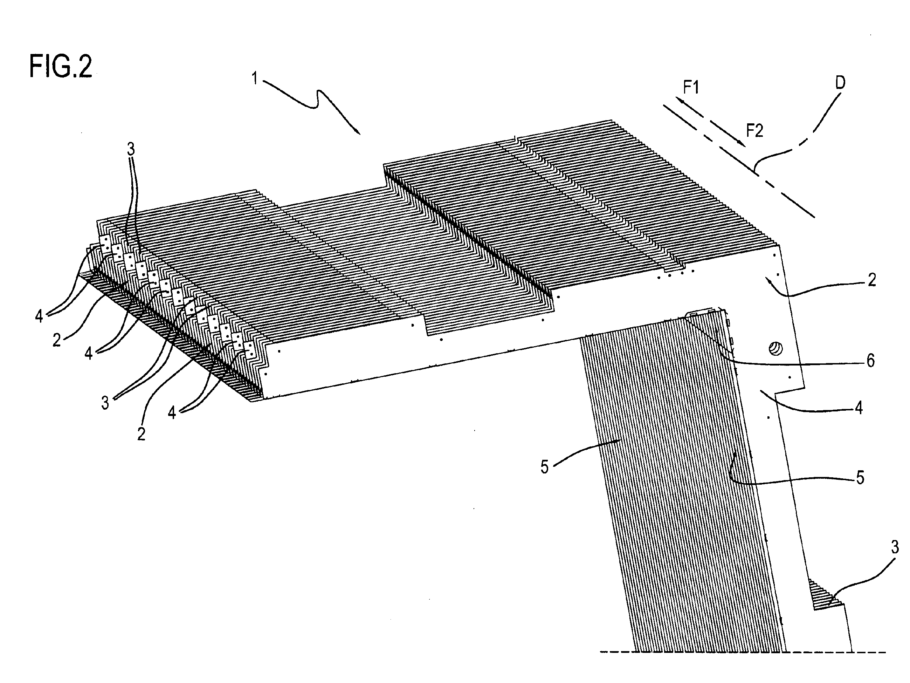

With reference to Figures 1 to 3, the numeral 1 denotes a covering device.

Generally speaking, the covering device 1 is used to protect fixed or moving parts of machine tools or automatic machines from external contaminating agents.

The covering device 1 comprises a plurality of mounting frames 2 arranged parallel to each other along a direction of extension labelled D in the drawings.

The direction of extension D is defined by the directions of feed along which the covering device 1 can move, as indicated by the arrow F. In the embodiment illustrated, the covering device 1 has the shape of an L.

Alternatively, the covering device 1 might have the shape of a U.

The shape of the covering device 1 is defined by the shape of the mounting frames 2.

Thus, at right angles to the feed direction D, the mounting frames 2 have an L-shaped main cross section.

Preferably, the mounting frames 2 are connected to each other by pleated, bellows elements 3.

More specifically, each bellows element 3 is interposed between two mounting frames 2.

The mounting frames 2 are movable towards and away from each other from a least extended configuration, where the covering device 1 is closed, to a most extended configuration where it is open, and vice versa.

The bellows elements 3 can be extended or contracted as the mounting frames 2 are moved away from and towards each other in the directions indicated by the arrows F1 and F2, respectively.

Each mounting frame 2 comprises at least two side panels 5 and a corner element 6 interposed between the two side panels 5.

The side panels 5 are positioned at an angle to each other and define a common, uncovered corner region which is covered by the corner element 6.

More specifically, the side panels 5 are at right angles to each other to define the L-shaped structure.

Each mounting frame 2 comprises a vertical panel 4 connected to the side panels 5 and to the corner element 6.

The vertical panels 4 of the mounting frames 6 are parallel to each other along the direction of extension D of the device 1.

Each bellows element 3 is fixed to the vertical panels 4 of two consecutive mounting frames 2 between which the selfsame bellows element 3 is interposed.

That way, the bellows elements 3 come into contact with the side panels 5 and with the corner element 6 of one of the two mounting frames 2 between which they are interposed.

The corner element 6 comprises a first and a second panel 8 and 9 at an angle to each other.

Preferably, the first and second panels 8 and 9 are at right angles to each other, defining an opening angle of 90°.

It should be noted that the opening angle between the first and the second panel 8 and 9 is substantially the same as the angle defined by the side panels 5.

The side panels 5 of each mounting frame 2 are positioned at least partly on top of a respective portion of the corner element 6 associated therewith.

More precisely, a first side panel 5a is positioned on top of a portion of the outside surface 10 of the first panel 8 and a second side panel 5b is positioned on top of a portion of the outside surface 11 of the second panel 9 of the corner element 6.

By outside surface 10 and 11 of the first and the second panel 8 and 9 is meant the surface that comes at least partly into contact with the bellows element 3.

Starting from one end of the covering device 1, each corner element 6 at least partly overlaps the consecutive corner element 6.

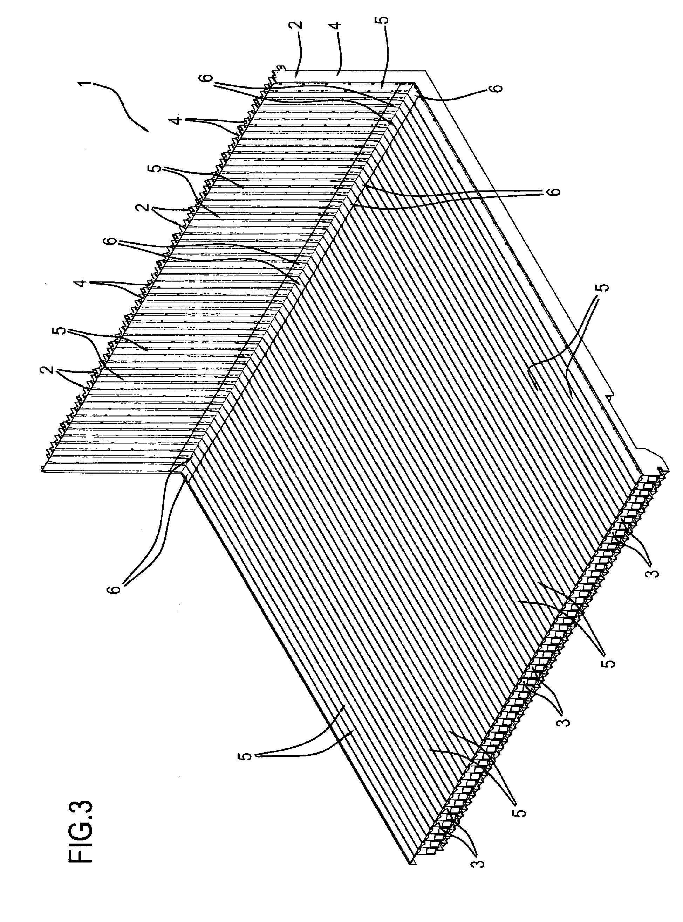

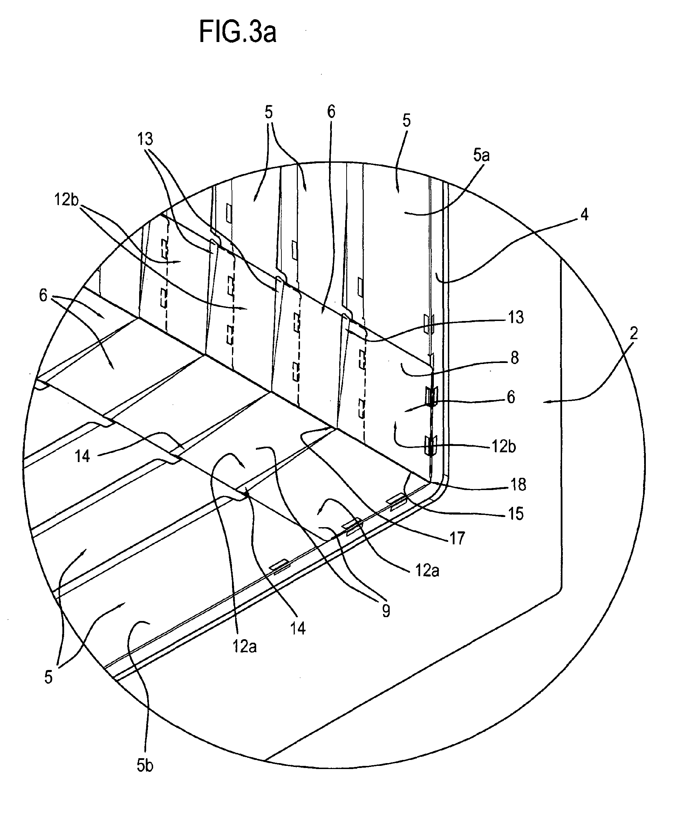

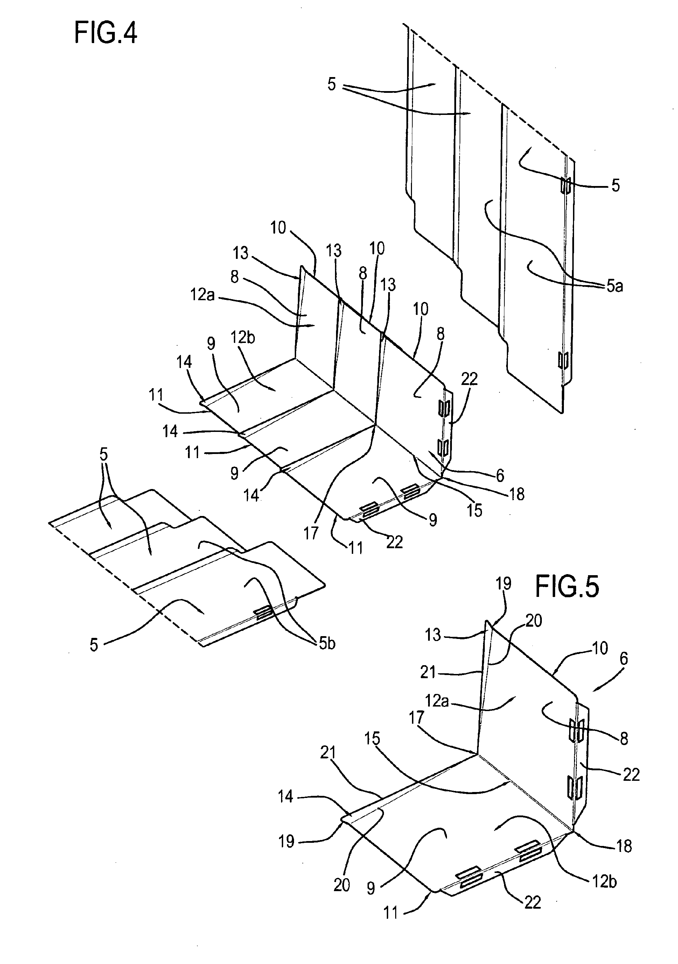

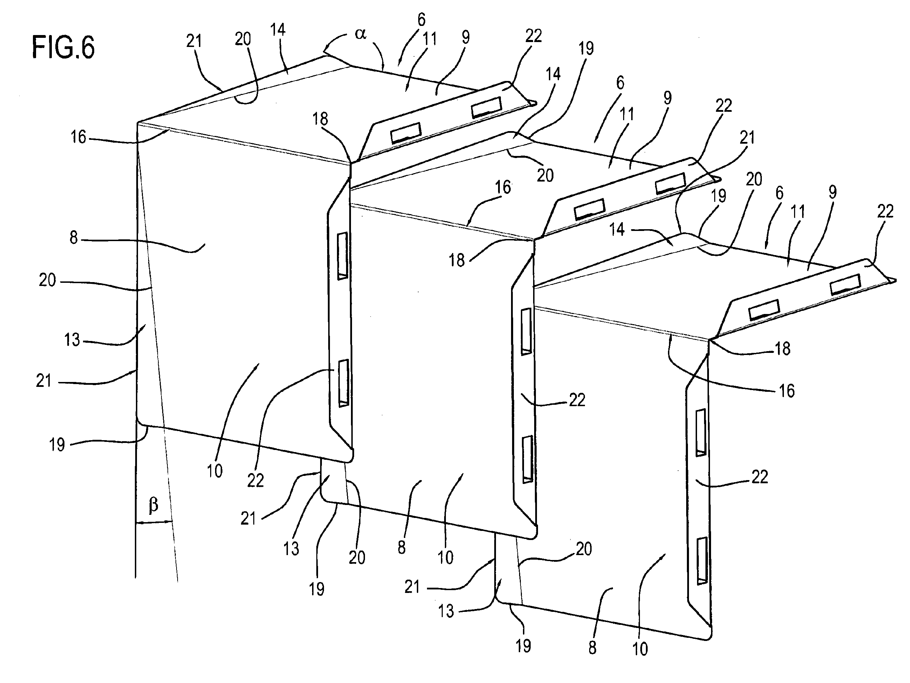

With reference in particular to Figures 3a, 4 and 5, the first and the second panel 8 and 9 of one corner element 6 is positioned at least partly on top of the respective first and second panel 8 and 9 of the consecutive corner element 6.

That way, during the reciprocating movement of the mounting frames 2 towards and away from each other, each corner element 6 slides on the consecutive corner element 6 from a first to a second end position along a direction parallel to the feed direction D.

The side panels 5 of each mounting frame 2 overlap at least partly the respective side panels 5 of the adjacent mounting frame 2.

During the reciprocating movement of the mounting frames 2 towards and away from each other, each side panel 5 slides along a direction parallel to the feed direction D from a first to a second end position on the respective side panel 5 which it overlaps.

Advantageously, the sliding of the side panels 5 and corner element 6 of two consecutive mounting frames 2 makes it possible to reduce considerably the size of the covering device 1 when it is in its closed configuration.

The first and the second panel 8 and 9 of each corner element 6 comprises a respective first and second scraper fin 13 and 14.

The first and the second scraper fin 13 and 14 are inclined at an angle to the first and the second panel 8 and 9.

In other words, the first and the second scraper fin 13 and 14 are inclined at a respective angle relative to the inclination of the first and the second panel 8 and 9.

The first and the second fin 13 and 14 are inclined at respective bend lines 20.

The first and the second scraper fin 13 and 14 are inclined at a defined angle α.

Preferably, the angle α is 165°.

The angle α may be a value in the range between 135° and 175°, including the limits.

The inclination of the first and second fins 13 and 14 of each corner element 6 is constant along the extension of the respective first and second panels 8 and 9.

The first and the second scraper fin 13 and 14 are directed outwards relative to the outside surface of the corner element 6 in such a way as to scrape the inside surfaces 12a and 12b of the first and the second panel 8 and 9 of the consecutive corner element 6. Advantageously, the first and the second scraper fin 13 and 14 prevent external contaminating agents from finding their way between two consecutive corner elements 6.

By inside surface 12a and 12b of the first and the second panel 8 and 9 is meant the surface which is not visible from the outside of the covering device 1 because it is directed towards the machine parts to be covered.

The first and second panels 8 and 9 of each corner element 6 are contiguous along a bend line 15 defining a cusp 16 having two free ends 17 and 18 opposite one another.

The first and the second fin 13 and 14 of each corner element 6 converge towards the same end 17 of the cusp 16.

The first and the second fin 13 and 14 of each corner element 6 are substantially triangular in shape, each with a respective base 19 and sides 20 and 21 connecting the base 19 to the same end 17 of the cusp 16.

Each bend line 20 of the first and second fins 13 and 14 coincides with one of the two sides of the selfsame fins.

The sides 20 and 21 of each first and second fin 13 and 14 diverge from the respective base 19, which defines their maximum distance apart, and converge on the common vertex 17, coinciding with one of the two ends of the cusp 16.

The sides 20 and 21 of each first and second fin 13 and 14 define an opening angle β of 6°.

The angle β may be a value in the range between 3° and 12°, including the limits.

Advantageously, the shape of the scraper fins 13 and 14 prevents jamming of two consecutive corner elements 6 during the sliding of one corner element 6 relative to the other since the first and the second scraper fin 13 and 14 converge on the second vertex 17 of the cusp 16, allowing each corner element 6 to slide within the bend line 15 of the consecutive corner element 6.

That means each corner element 6 can be connected directly to the vertical panel 4 of the respective mounting frame 2 by a rigid connection, as illustrated in particular in Figure 3a.

More specifically, the first and second panels 8 and 9 of each corner element 6 are connected to the respective mounting frame 2 by respective side flanges 22.

The side flanges 22 are at right angles to the first and second panels 8 and 9 and parallel to the vertical panel 4 of the respective mounting frame 2.

Advantageously, a rigid connection between the corner element 6 and the respective mounting frame 2 makes it easier to assemble the covering device 1 and reduces its routine maintenance costs.

The invention described above is susceptible of industrial application and it may be modified and adapted in several ways without thereby departing from the scope of the inventive concept. Moreover, all the details of the invention may be substituted for technically equivalent elements.

## Claims

1. A covering device comprising a plurality of mounting frames (2) positioned parallel to each other and being mobile towards and away from each other along a direction (D) of reciprocating movement;
each mounting frame (2) comprising at least two side guard panels (5) positioned at an angle to each other; a corner element (6) interposed between the two side panels (5) in a common corner region (7) starting from one end of the covering device (1); each corner element (6) overlaps at least partly the consecutive corner element (6); during the reciprocating movement of the mounting frames (2), each corner element (6) being slidable, along a direction parallel to the feed direction (D), on the corner element (6) which is consecutive to it and which it overlaps;
**the corner element (6) comprising a first and a second panel (8, 9) at an angle to each other;**
**the first and second panels (8, 9) of each corner element (6) being contiguous along a bend line (15) defining a cusp (16) having two free ends (17,18) opposite one another;**
**the first and the second panel (8, 9) of each corner element (6) comprising a respective first and second scraper fin (13, 14);**
**covering device being characterised in that**
**the first and the second fin (13, 14) of each corner element (6) converge towards the same end (17) of the cusp (16).**

2. The device according to claim 1, **characterized in that** the side panels (5) of each mounting frame (2) are positioned at least partly on top of a respective portion of the respective corner element (6); a first side panel (5a) is positioned on top of a portion of the outside surface (10) of the first panel (8) and a second side panel (5b) is positioned on top of a portion of the outside surface (11) of the second panel (9) of the corner element (6).

3. The device according to claim 2, **characterized in that** the side panels (5) of each mounting frame (2) overlap at least partly the respective side panels (5) of the consecutive corner element (6); during the reciprocating movement of the mounting frames (2), each side panel (5) being slidable, along a direction parallel to the feed direction (D), on the respective side panel (5).

4. The device according to any of the claims from 1 to 3, **characterized in that** each corner element (6) comprises a first and a second panel (8, 9) at right angles to one another and contiguous along a bend line (15) defining a cusp (16) having two free ends (17, 18); the first and the second panel (8, 9) of each corner element (6) comprising a respective first and second scraper fin (13, 14) inclined at a defined angle (α) to each other and converging at the same end (17) of the cusp (16); the first and second fins (13, 14) of each corner element (6) being directed outwards and scraping the inside surface of the corner element (6) consecutive to it.

5. The device according to claim 4, **characterized in that** the first and second fins (13, 14) of each corner element (6) have the shape of a triangle, each having a base (19) and respective sides (20, 21) which diverge towards the respective base (19) and converge towards the same end (17) of the cusp (16).

6. The device according to claim 4 or 5, **characterized in that** the inclination of the first and second fins (13, 14) of each corner element (6) is constant along the extension of the respective first and second panels (8, 9).

7. The device according to any of the claims from 4 to 6, **characterized in that** the inclination angle (α) of the first and second scraper fins (13, 14) is within the range 135° to 175°, including the ends.

8. The device according to any of the claims from 4 to 7, **characterized in that** each mounting frame (2) comprises a vertical panel (4); each corner element (6) being connected directly to the vertical panel (4) of the respective mounting frame (2) by a rigid connection.

9. The device according to claim 8, **characterized in that** the first and second panels (8, 9) of each corner element (6) are connected to the respective mounting frame (2) by respective side flanges (22) at right angles to the first and second panels (8, 9) and parallel to the vertical panel (4) of the frame (2) itself.

## Patentansprüche

1. Abdeckvorrichtung, umfassend eine Vielzahl an Montagerahmen (2), positioniert parallel zueinander und beweglich hin- und wegführend voneinander entlang einer gegenseitigen Bewegungsrichtung (D);
wobei jeder Rahmen (2) mindestens zwei Seitenschutzpaneele (5) umfasst, die in einem Winkel zueinander positioniert sind;
ein Eckelement (6), das zwischen zwei Seitenpaneelen (5) in einem gemeinsamen Eckbereich (7) eingesetzt ist, ausgehend von einem Ende der Abdeckvorrichtung (1), wobei jedes Eckelement (6) zumindest teilweise das darauffolgende Eckelement (6) überlappt, wobei jedes Eckelement (6) während der gegenseitigen Bewegung der Montagerahmen (2) entlang einer Richtung, die parallel zur Zuführungsrichtung (D) verläuft, auf dem Eckelement (6), das darauf folgt und dieses überlappt, verschiebbar ist;
wobei das Eckelement (6) ein erstes und ein zweites Paneel (8, 9) in einem Winkel zueinander umfasst;
wobei das erste und das zweite Paneel (8, 9) eines jeden Eckelements (6) angrenzend ist entlang einer Krümmungslinie (15), definierend einen Scheitelpunkt (16), aufweisend zwei freie Enden (17, 18), die gegenständig zueinander angeordnet sind;
wobei das erste und das zweite Paneel (8, 9) eines jeden Eckelements (6) eine jeweilige erste und zweite Abstreiferrippe (13, 14) umfassen;
wobei die Abdeckvorrichtung **dadurch gekennzeichnet ist, dass** die erste und die zweite Abstreiferrippe (13, 14) eines jeden Eckelements (6) zum selben Ende (17) des Scheitelpunkts (16) zusammenlaufen.

2. Vorrichtung nach Anspruch 1, **dadurch gekennzeichnet, dass** die Seitenpaneele (5) eines jeden Montagerahmens (2) zumindest teilweise an der Oberseite eines jeweiligen Abschnitts des jeweiligen Eckelements (6) positioniert sind, wobei ein erstes Seitenpaneel (5a) an der Oberseite eines Abschnitts der äußeren Oberfläche (10) des ersten Paneels (8) positioniert ist und ein zweites Seitenpaneel (5b) an der Oberseite eines Abschnitts der äußeren Oberfläche (11) des zweiten Seitenpaneels (9) des Eckelements (6) positioniert ist.

3. Vorrichtung nach Anspruch 2, **dadurch gekennzeichnet, dass** die Seitenpaneele (5) eines jeden Montagerahmens (2) zumindest teilweise die jeweiligen Seitenpaneele (5) des darauffolgenden Eckelements (6) überlappen, wobei jedes Seitenpaneel (5) während der gegenseitigen Bewegung der Montagerahmen (2) auf dem jeweiligen Seitenpaneel (5) entlang einer Richtung verschiebbar ist, die parallel zur Zuführungsrichtung (D) verläuft.

4. Vorrichtung nach einem der Ansprüche 1 bis 3, **dadurch gekennzeichnet, dass** jedes Eckelement (6) ein erstes und ein zweites Paneel (8, 9) in rechten Winkeln zueinander und angrenzend entlang einer Krümmungslinie (15), definierend einen zwei freie Enden (17, 18) aufweisenden Scheitelpunkt (16), umfasst, wobei das erste und das zweite Paneel (8, 9) eines jeden Eckelements (6) eine jeweilige erste und zweite Abstreiferrippe (13, 14) umfassen, geneigt in einem vorgegebenen Winkel (α) zueinander und zusammenlaufend am selben Ende (17) des Scheitelpunkts (16), wobei die erste und die zweite Rippe (13, 14) eines jeden Eckelements (16) nach außen gerichtet sind und die innenseitige Oberfläche des darauffolgenden Eckelements (6) abstreifen.

5. Vorrichtung nach Anspruch 4, **dadurch gekennzeichnet, dass** die erste und die zweite Rippe (13, 14) eines jeden Eckelements (6) die Form eines Dreiecks aufweisen, jeweils aufweisend eine Basis (19) und jeweilige Seiten (20, 21), die zur jeweiligen Basis (19) auseinandergehen und zum selben Ende (17) des Scheitelpunkts (16) zusammenlaufen.

6. Vorrichtung nach Anspruch 4 oder 5, **dadurch gekennzeichnet, dass** die Neigung der ersten und zweiten Rippe (13, 14) eines jeden Eckelements (6) entlang der Ausdehnung des jeweiligen ersten und zweiten Paneels (8, 9) konstant ist.

7. Vorrichtung nach einem der Ansprüche 4 bis 6, **dadurch gekennzeichnet, dass** der Neigungswinkel (α) der ersten und zweiten Abstreiferrippe (13, 14) einschließlich der Enden zwischen 135° und 175° liegt.

8. Vorrichtung nach einem der Ansprüche 4 bis 7, **dadurch gekennzeichnet, dass** jeder Montagerahmen (2) ein vertikales Paneel (4) umfasst, wobei jedes Eckelement (6) direkt mit dem vertikalen Paneel (4) des jeweiligen Montagerahmens (2) durch eine steife Verbindung verbunden ist.

9. Vorrichtung nach Anspruch 8, **dadurch gekennzeichnet, dass** das erste und das zweite Paneel (8, 9) eines jeden Eckelements (6) mit dem jeweiligen Montagerahmen (2) durch jeweilige Seitenflansche (22) in rechten Winkeln zum ersten und zweiten Paneel (8, 9) und parallel zum vertikalen Paneel (4) des Rahmens (2) verbunden sind.

## Revendications

1. Dispositif de recouvrement comprenant une pluralité de supports de montage (2) positionnés parallèlement les uns aux autres et se rapprochant ou s'éloignant les uns des autres le long d'une direction (D) de mouvement alternatif ;
chaque support de montage (2) comprenant au moins deux panneaux latéraux de protection (5) positionnés suivant un angle l'un par rapport à l'autre ;
un élément d'angle (6) interposé entre les deux panneaux latéraux (5) dans une zone d'angle commune (7) à partir d'une extrémité du dispositif de recouvrement (1) ; chaque élément d'angle (6) chevauchant au moins en partie l'élément d'angle consécutif (6) ; lors du mouvement alternatif des supports de montage (2), chaque élément d'angle (6) pouvant coulisser, le long d'une direction parallèle à la direction d'alimentation (D), sur l'élément d'angle (6) lui étant consécutif et qu'il chevauche ;
l'élément d'angle (6) comprenant un premier et un second panneau (8, 9) suivant un angle l'un par rapport à l'autre ;
les premier et second panneaux (8, 9) de chaque élément d'angle (6) étant contigus le long d'une ligne de pliage (15) définissant une cuspide (16) ayant deux extrémités libres (17, 18) opposées l'une à l'autre ;
le premier et le second panneau (8, 9) de chaque élément d'angle (6) comprenant une première et une seconde ailette de raclage respectives (13, 14) ;
le dispositif de recouvrement étant **caractérisé en ce que** la première et la seconde ailette (13, 14) de chaque élément d'angle (6) convergent vers la même extrémité (17) de la cuspide (16).

2. Dispositif selon la revendication 1, **caractérisé en ce que** les panneaux latéraux (5) de chaque support de montage (2) sont positionnés au moins partiellement au-dessus d'une partie respective de l'élément d'angle respectif (6) ; un premier panneau latéral (5a) est positionné au-dessus d'une partie de la surface extérieure (10) du premier panneau (8) et un second panneau latéral (5b) est positionné au-dessus d'une partie de la surface extérieure (11) du second panneau (9) de l'élément d'angle (6).

3. Dispositif selon la revendication 2, **caractérisé en ce que** les panneaux latéraux (5) de chaque support de montage (2) chevauchent au moins partiellement les panneaux latéraux respectifs (5) de l'élément d'angle consécutif (6) ; lors du mouvement alternatif des supports de montage (2), chaque panneau latéral (5) pouvant coulisser, le long d'une direction parallèle à la direction d'alimentation (D), sur le panneau latéral correspondant (5).

4. Dispositif selon l'une quelconque des revendications de 1 à 3, **caractérisé en ce que** chaque élément d'angle (6) comprend un premier et un second panneau (8, 9) réciproquement orthogonaux et contigus le long d'une ligne de pliage (15) définissant une cuspide (16) ayant deux extrémités libres (17, 18) ; le premier et le second panneau (8, 9) de chaque élément d'angle (6) comprenant une première et une seconde ailette de raclage respectives (13, 14) inclinées réciproquement selon un angle défini (α) et convergeant au niveau de la même extrémité (17) de la cuspide (16) ; les première et seconde ailettes (13, 14) de chaque élément d'angle (6) étant orientées à l'extérieur et raclant la surface intérieure de l'élément d'angle (6) lui étant consécutif.

5. Dispositif selon la revendication 4, **caractérisé en ce que** les première et seconde ailettes (13, 14) de chaque élément d'angle (6) possèdent la forme d'un triangle, chacune ayant une base (19) et des côtés respectifs (20, 21) qui divergent vers la base respective (19) et convergent vers la même extrémité (17) de la cuspide (16).

6. Dispositif selon les revendications 4 ou 5, **caractérisé en ce que** l'inclinaison des première et seconde ailettes (13, 14) de chaque élément d'angle (6) est constante le long de l'extension des premier et second panneaux respectifs (8, 9).

7. Dispositif selon l'une quelconque des revendications de 4 à 6, **caractérisé en ce que** l'angle d'inclinaison (α) des première et seconde ailettes de raclage (13, 14) est compris entre 135° et 175°, en incluant les extrémités.

8. Dispositif selon l'une quelconque des revendications de 4 à 7, **caractérisé en ce que** chaque support de montage (2) comprend un panneau vertical (4) ; chaque élément d'angle (6) étant relié directement au panneau vertical (4) du support de montage respectif (2) par un raccordement rigide.

9. Dispositif selon la revendication 8, **caractérisé en ce que** les premier et second panneaux (8, 9) de chaque élément d'angle (6) sont reliés au support de montage respectif (2) par des rebords latéraux respectifs (22) orthogonaux par rapport aux premier et second panneaux (8, 9) et parallèles au panneau vertical (4) du support (2) lui-même.
